Europäisches Patentamt

European Patent Office

Office européen des brevets

(19)

(11) Numéro de publication : **0 337 953 B1**

(12)    # FASCICULE DE BREVET EUROPEEN

(45) Date de publication du fascicule du brevet :
**11.12.91 Bulletin 91/50**

(51) Int. Cl.$^5$ : **G01G 3/14, G01G 21/24, G01L 1/22**

(21) Numéro de dépôt : **89810271.0**

(22) Date de dépôt : **07.04.89**

---

(54) **Dispositif de pesage à jauges de contrainte.**

---

(30) Priorité : **12.04.88 CH 1341/88**

(43) Date de publication de la demande :
**18.10.89 Bulletin 89/42**

(45) Mention de la délivrance du brevet :
**11.12.91 Bulletin 91/50**

(84) Etats contractants désignés :
**BE CH DE ES FR GB IT LI NL SE**

(56) Documents cités :
**EP-A- 0 153 121**
**EP-A- 0 227 597**
**FR-A- 2 505 496**
**US-A- 3 788 411**
**US-A- 4 454 770**

(56) Documents cités :
**PATENT ABSTRACTS OF JAPAN, vol. 11, no. 261 (P-609)[2708], 25 août 1987; & JP-A-62 66 127 (TOKYO ELECTRIC CO. LTD) 25-03-1987**
**PATENT ABSTRACTS OF JAPAN, vol. 10, no. 322 (P-511)[2378], 31 octobre 1986; & JP-A-61 128 132 (TOKYO ELECTRIC CO. LTD) 16-06-1986**

(73) Titulaire : **S.C.A.I.M.E.**
**Route de Thonon Juvigny**
**F-74100 Annemasse (FR)**

(72) Inventeur : **Aumard, Jean-Pierre**
**5 place du Jumelage**
**F-74100 Annemasse (FR)**

(74) Mandataire : **Kirker, Gaylord Emile et al**
**c/o KIRKER & Cie S.A. 14, Rue du Mont-Blanc**
**Case postale 872**
**CH-1211 Genève 1 (CH)**

---

## Description

On connaît des dispositifs de pesage à jauges de contrainte, appelés couramment capteurs de pesage à jauges de contrainte, qui sont utilisés par exemple dans des balances de ménage et dans des pèse-personnes. Ils comprennent une barre ou poutre métallique encastrée à l'une de ses extrémités et présentant en certains endroits de sa longueur des régions affaiblies ou charnières, où l'épaisseur de métal est plus faible qu'ailleurs. Des jauges de contrainte sont fixées sur cette barre, au droit des régions affaiblies ou charnières.

Parmi ces capteurs, on connaît ceux appelés capteurs de pesage du type parallélogramme à jauges de contrainte dits "auto-portants" ou à moment constant, qui sont des capteurs du genre indiqué plus haut, qui sont associés à un plateau support de charges, qui ont la particularité d'avoir une réponse totalement indépendante de la position — donc de l'excentration — des charges sur ce plateau.

Ces capteurs de type parallélogramme utilisés jusqu'à présent sont constitués de quatre jauges de contrainte disposées sur chacune des quatre charnières d'un corps d'épreuve usiné. Ces quatre jauges de contrainte sont ensuite reliées électriquement entre elles pour constituer un pont de wheatstone par l'intermédiaire de petits fils à une cosse électrique de raccordement d'où partent finalement les deux fils d'alimentation du pont, ainsi que les deux fils de mesure. Ce type de capteur présente l'inconvénient d'être long à fabriquer, du fait du grand nombre de fils, de la complexité du câblage et du collage des jauges en des zones différentes, et de ce fait un coût de fabrication élevé. Mais, par contre, cette disposition du pont de jauges assure l'autocompensation qui rend les capteurs classiques insensibles aux excentrations de charge. En effet, une excentration de charge engendre dans les deux charnières supérieures du capteur des forces identiques en intensité et en signe. Dans le capteur classique ces forces sont mesurées sur ces deux charnières par deux jauges de signes contraires (parce que juxtaposées dans le pont de wheatstone), ainsi la somme des mesures de ces deux jauges est nulle ; le phénomène est identique (avec deux forces de signe contraire) sur les deux charnières inférieures ; ainsi l'autocompensation est théoriquement parfaite. En pratique, on constate qu'un petit réglage final est presque toujours nécessaire. Ceci est dû principalement à trois imperfections : les imperfections de l'usinage du corps d'épreuve, les imperfections de positionnement des jauges et enfin, dans une moindre mesure, les imperfections d'homogénéité de la matière du corps d'épreuve. Ces petites imperfections peuvent être corrigées par de légères retouches d'usinage au niveau des charnières du capteur, de façon à modifier la géométrie du parallélogramme.

Lors de l'emploi de capteurs de pesage dans des articles produits en grande série, tels que des balances de ménage et des pèse-personnes, il est impératif de réduire le plus possible les coûts de fabrication. C'est pourquoi on a cherché à réduire de façon sensible le coût des capteurs de pesage à jauges de contrainte. On pourrait réaliser une diminution du prix de revient en collant côte à côte deux jauges sur deux charnières (supérieures ou inférieures) ou sur les deux charnières proches d'une même extrémité du capteur. Cette solution apporterait une légère simplification du collage mais la même complexité du câblage, ce qui ne représente qu'un gain négligeable.

En cherchant une autre solution, on s'est heurté à une difficulté majeure. En effet, on connaît des ensembles de quatre jauges de contrainte déjà reliées électriquement entre elles formant ainsi le pont de wheatstone complet sur un unique support. Ce pont est collé sur une seule des quatre charnières du corps d'épreuve, réduisant ainsi considérablement les opérations de collage et de câblage et donc le prix de revient. Mais cette disposition du pont de jauges n'assure pas l'autocompensation qui rend les capteurs classiques à quatre jauges individuelles insensibles aux excentrations de charge. Une simple comparaison montre la grandeur de l'obstacle ainsi rencontré :

Les écarts d'indication (ou erreur) des capteurs pour une excentration maximum de la charge sur le plateau (avant le réglage final indiqué plus haut) sont les suivants :

1. Capteur classique dit autocompensé, à quatre charnières et quatre jauges (avant réglage final): écarts inférieurs à 0,1 pour cent.

2. Capteur à quatre charnières et un groupe de quatre jauges reliées entre elles pour former un pont de wheatstone sur un unique support placé sur l'une des charnières : écarts d'environ 10 pour cent.

Ainsi, l'erreur dans le second cas est au moins cent fois plus grande que dans le premier, ce qui est énorme et inacceptable pour justifier une diminution du prix de revient.

L'auteur de la présente invention a néanmoins étudié le problème à fond et est arrivé, paradoxalement, à la conclusion qu'il est parfaitement possible de tourner l'obstacle en apparence insurmontable et de remplacer le pont de wheatstone à quatre jauges séparées, par un pont à quatre jauges concentrées ou "pavé" sur une seule charnière.

En effet, il a pu établir que l'on peut corriger l'effet considérable des excentrations de la charge en procédant à un enlèvement de matière à l'endroit de certaines charnières (de façon à en déplacer la fibre neutre) autres que celle où est fixé le pont de quatre jauges.

Il a pu déterminer exactement la quantité de matière à enlever pour réaliser cette correction et il est arrivé au résultat suivant :

3. Capteur avec un pont à quatre jauges sur un seul support fixé au droit de l'une des charnières, avec deux charnières retouchées par usinage, lors de la fabrication (avant réglage final) : écarts inférieurs à 0,1 pour cent, comme dans le cas du capteur classique.

Ce résultat surprenant et inattendu montre qu'il est possible de diminuer de façon très sensible le prix de revient du capteur, moyennant une opération de fraisage supplémentaire, effectuée en cours de fabrication, simple et d'un coût négligeable.

La correction de l'effet des excentrations de la charge peut, dans une variante, être réalisée par retouche d'une seule des charnières autre que celle où est fixée la jauge de contrainte multiple, par exemple pont de quatre jauges.

Bien entendu, l'inexactitude résiduelle, due aux trois facteurs indiqués plus haut, peut être corrigée exactement comme dans le cas classique, lors du contrôle et de la finition.

Nous n'avons évoqué ici que les écarts dus aux excentrations suivant l'axe longitudinal du capteur, celles dues aux excentrations suivant l'axe transversal (c'est-à-dire celles qui sollicitent le capteur en torsion) étant identiques quel que soit le type de capteur considéré, ceux-ci présentant tous un plan de symétrie vertical suivant leur longueur.

La présente invention a pour objet un dispositif de pesage à jauges de contrainte qui est conforme à la revendication 1 ou à la revendication 3.

Le dessin annexé représente, à titre d'exemple, une forme d'exécution du dispositif selon l'invention.

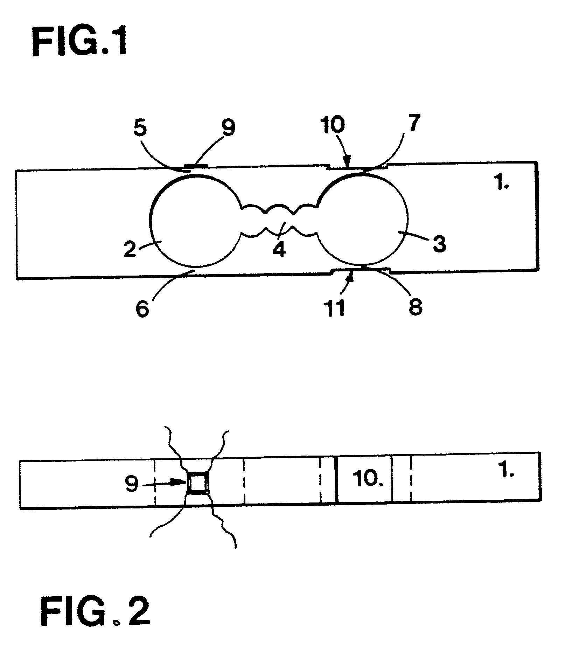

Figure 1 en est une vue latérale ;
Figure 2 est une vue en plan correspondant à la fig. 1.

Le dispositif représenté comprend, comme d'autres dispositifs connus de mesures de forces à jauges de contrainte, une barre de métal destinée à être encastrée à l'une de ses extrémités dans le bâti d'une balance de ménage ou d'un pèse-personnes, par exemple, l'autre extrémité recevant un plateau support de charges.

Cette barre présente deux évidements traversants 2, 3, de forme circulaire, reliés entre eux par une fente 4 réalisée simplement par fraisage ou par des trous chevauchants. Ainsi, la barre 1 présente quatre régions affaiblies 5, 6, 7 et 8 formant charnières.

Le dispositif représenté diffère de ceux connus par le fait qu'au lieu de comporter quatre jauges de contrainte simples fixées chacune sur l'une des quatre parties affaiblies 5, 6, 7, 8, il présente une jauge de contrainte multiple 9 formée par quatre jauges simples couplées électriquement en pont et fixées sur un support commun fixé sur la barre, un conducteur étant représenté soudé à chacun des quatre sommets du pont.

L'inexactitude de mesure provenant du remplacement de quatre jauges de contrainte simples, placées selon un plan symétrique, par une seule jauge quadruple fixée sur l'endroit affaibli 5 de la barre 1, déterminé par l'évidement 2, peut être déterminée d'avance pour la fabrication d'une série, de même que la quantité de matière qu'il faut enlever sur la barre 1, aux deux endroits affaiblis 10 et 11 déterminés par l'évidement 3, pour corriger exactement cette inexactitude de mesure. Il est donc facile de réaliser la correction voulue, en cours de fabrication, par une seule opération de fraisage précise, donc n'introduisant qu'un supplément de frais négligeable.

La légère correction finale usuelle due aux imperfections diverses d'un objet réel se fera, comme dans les dispositifs connus, par élimination d'une très faible quantité de matière dans les évidements 2 et 3, à l'endroit des affaiblissements 5, 6, 7, 8, si bien que l'on obtiendra avec le dispositif décrit exactement la même précision qu'avec les capteurs de pesage du type connu parallélogramme à jauges de contrainte dits "auto-portants".

Comme indiqué plus haut, les évidements à réaliser aux endroits affaiblis 10, 11 peuvent être obtenus par l'emploi de méthodes d'usinage classiques, tel l'enlèvement de matière (fraisage par exemple). On peut également obtenir de tels évidements par d'autres méthodes, notamment par filage.

**Revendications**

1. Dispositif de pesage à jauges de contrainte, comprenant une barre métallique (1) prévue pour être encastrée à l'une de ses extrémités et recevoir un plateau support de charges à l'autre extrémité, présentant des évidements traversants (2, 3) en certains endroits de sa longueur, déterminant dans cette barre des régions affaiblies (5, 6, 7, 8) formant charnières, ces évidements étant reliés entre eux par une partie évidée (4), caractérisé en ce qu'il comporte une jauge de contrainte multiple (9) fixée sur la barre (1) en un seul (5) desdits endroits affaiblis (5, 6, 7, 8), et en ce que la barre (1) présente des entailles (10, 11) au droit de certains (7, 8) des autres endroits affaiblis et déplaçant ainsi leur fibre neutre, ces entailles étant calibrées pour corriger l'inexactitude d'excentration due à la concentration des jauges en un seul endroit sur la barre (1).

2. Dispositif selon la revendication 1, dans lequel la jauge de contrainte multiple (9) est fixée sur une partie affaiblie (5) de la barre (1) déterminée par l'un (2) des évidements susdits, caractérisé en ce que lesdites entailles (10, 11) sont pratiquées sur deux endroits affaiblis (7, 8) déterminés par un autre évidement (3).

3. Dispositif de pesage à jauges de contrainte, comprenant une barre métallique (1) prévue pour être encastrée à l'une de ses extrémités et recevoir un plateau support de charges à l'autre extrémité, présentant des évidements traversants (2, 3) en certains endroits de sa longueur, déterminant dans cette barre des régions affaiblies (5, 6, 7, 8) formant charnières, ces évidements étant reliés entre eux par une partie évidée (4), caractérisé en ce qu'il comporte une jauge de contrainte multiple (9) fixée sur la barre (1) en un seul (5) desdits endroits affaiblis (5, 6, 7, 8), et en ce que la barre (1) présente une seule entaille au droit d'un des autres endroits affaiblis (6, 7, 8) et déplaçant ainsi sa fibre neutre, cette entaille étant calibrée pour corriger l'inexactitude d'excentration due à la concentration des jauges en un seul endroit sur la barre (1)

## Claims

1. A weighing device with strain gauges, comprising a metal bar (1) which is to be fixed at one end and accommodate a load-bearing platform at the other end, and which has transverse recesses (2, 3) at certain locations along its length, determining in this bar weakened regions (5, 6, 7, 8) forming hinges, these recesses being joined to one another by a recessed part (4), characterized in that it has a multiple strain gauge (9) fixed to the bar (1) at only one (5) of said weakened locations (5, 6, 7, 8), and in that the bar (1) has notches (10, 11) in line with some (7, 8) of the other weakened locations, thereby displacing their neutral axis, these notches being dimensioned so as to correct the inaccuracy in offset due to the concentration of the gauges at a single location on the bar (1).

2. A device according to Claim 1 in which the multiple strain gauge (9) is fixed to a weakened part (5) of the bar (1), determined by one (2) of the aforementioned recesses, characterized in that said notches (10, 11) are made at two weakened locations (7, 8) determined by another recess (3).

3. A weighing device with strain gauges, comprising a metal bar (1) which is to be fixed at one end and accommodate a load-bearing platform at the other end, and which has transverse recesses (2, 3) at certain locations along its length, determining in this bar weakened regions (5, 6, 7, 8) forming hinges, these recesses being joined to one another by a recessed part (4), characterized in that it has a multiple strain gauge (9) fixed to the bar (1) at only one (5) of said weakened locations (5, 6, 7, 8), and in that the bar (1) has a single notch in line with one of the other weakened locations (6, 7, 8), thereby displacing its neutral axis, this notch being dimensioned so as to correct the inaccuracy in offset due to the concentration of the gauges at a single location on the bar (1).

## Patentansprüche

1. Dehnungsmessstreifen-Wägevorrichtung, bestehend aus einem Metallstab (1), der dazu bestimmt ist an einem seiner Enden eingebaut zu werden und an seinem anderen Ende eine Lastauflageplatte aufzunehmen und der an bestimmten Stellen über seine Länge angeordnete, durchgehende Aussparungen (2, 3) aufweist, durch die sich auf diesem Stab geschwächte Partien (5, 6, 7, 8) ergeben, die Scharniere bilden, und wobei diese Aussparungen miteinander durch eine Aussparpartie (4) verbunden sind, dadurch gekennzeichnet, dass sie einen auf einer einzigen (5) dieser abgeschwächten Partien (5, 6, 7, 8) einen am Stab (1) befestigten MehrfachDehnungsmessstreifen (9) enthält, und dadurch, dass der Stab (1) längs bestimmter, geschwächter Partien (7, 8) der anderen geschwächten Partien Einkerbungen aufweist, die somit ihre neutrale Faser verschieben, und wobei diese Einkerbungen geeicht sind, um Exzentrizitätsungenauigkeiten zu korrigieren, die sich durch die Konzentration der Messstreifen auf eine einzige Stelle auf dem Stab (1) ergeben.

2. Vorrichtung nach Patentanspruch 1, bei der der Mehrfach-Dehnungsmessstreifen (9) auf einer geschwächten Partie (5) des Stabes (1) befestigt ist, die sich durch eine (2) der Einkerbungen ergibt, dadurch gekennzeichnet, dass die Einkerbungen (10, 11) auf zwei geschwächten Partien (7, 8) vorgesehen werden, die sich durch eine andere Einkerbung (3) ergeben.

3. Dehnungsmessstreifen-Wägevorrichtung, bestehend aus einem Metallstab (1), der dazu bestimmt ist an einem seiner Enden eingebaut zu werden und an seinem anderen Ende eine Lastauflageplatte aufzunehmen und der an bestimmten Stellen über seine Länge angeordnete, durchgehende Aussparungen (2, 3) aufweist, durch die sich auf diesem Stab geschwächte Partien (5, 6, 7, 8) ergeben, die Scharniere bilden, und wobei diese Aussparungen miteinander durch eine Aussparpartie (4) verbunden sind, dadurch gekennzeichnet, dass sie einen auf einer einzigen (5) dieser abgeschwächten Partien (5, 6, 7, 8) am Stab (1) befestigten Mehrfach-Dehnungsmessstreifen enthält, und dadurch, dass der Stab (1) längs einer der anderen geschwächten Partien (6, 7, 8) eine einzige Einkerbung aufweist, die somit seine neutrale Faser verschieben, und wobei diese Einkerbung geeicht ist, um Exzentrizitätsungenauigkeiten zu korrigieren, die sich durch die Konzentration der Messstreifen auf eine einzige Stelle auf dem Stab (1) ergeben.

# FIG.1

# FIG.2